# EUROPÄISCHE PATENTSCHRIFT

(11) **EP 3 627 991 B1**
(45) Veröffentlichungstag und Bekanntmachung des Hinweises auf die Patenterteilung: **15.02.2023**
(21) Anmeldenummer: 18714960.4
(22) Anmeldetag: 26.02.2018
(51) Int. Cl.: A47J 31/06

(54) **FILTERSYSTEM ZUR ZUBEREITUNG VON GETRÄNKEN MITTELS EINES GETRÄNKESUBSTRATS**
FILTER SYSTEM FOR PREPARING BEVERAGES BY MEANS OF A BEVERAGE BASE
SYSTÈME DE FILTRATION DESTINÉ À LA PRÉPARATION DE BOISSONS À L'AIDE D'UN SUBSTRAT DE BOISSON

(30) Priorität: 08.06.2017 DE 102017112677
(43) Veröffentlichungstag der Anmeldung: 01.04.2020
(73) Patentinhaber: Fischer, Felix, 72124 Pliezhausen (DE)
(72) Erfinder: Fischer, Felix, 72124 Pliezhausen (DE)
(74) Vertreter: Limbeck, Achim
(86) Internationale Anmeldenummer: PCT/DE2018/100166
(87) Internationale Veröffentlichungsnummer: WO 2018/224070

(56) Entgegenhaltungen:
- DE-U1- 29 708 492
- US-A1- 2012 024 161
- US-A1- 2012 024 162
- US-A1- 2013 160 655

## Beschreibung

### Technisches Gebiet

Die vorliegende Erfindung betrifft ein Filtersystem zur Zubereitung von Getränken mittels eines Getränkesubstrats wie beispielsweise Kaffeepulver, Suppenpulver oder Tee, mit einem für den Einsatz in einem Behältnis vorgesehenen Filter oder Sieb, mittels dem das Getränkesubstrat in die erhitzte Flüssigkeit eines in dem Behältnis vorgesehenen ersten Flüssigkeits-Aufnahmeraums geleitet wird, in dem sich das gefilterte Getränkesubstrat entfaltet und seine Inhaltsstoffe an die Flüssigkeit abgibt.

Als Filter oder Sieb seien nachstehend auch beutelartige Filtereinrichtungen wie Teebeutel und dergleichen geartete Behältnisse zur Abgabe von Getränkesubstrat an eine Flüssigkeit verstanden, wobei die Trennung je nach Bedarf der Filter oder das Sieb ein feineres oder gröberes Geflecht, Drahtgitter, Lochblech oder Ähnliches aufweisen kann.

### Stand der Technik

Es ist aus dem Stand der Technik bekannt, in Behältnisse entweder passende Tee-, Suppen- oder Kaffeebeutel oder Filter-/Siebbehältnisse (bspw. Teefilter, Teesiebe, Suppenfilter etc.) einzusetzen, wobei nach dem Aufguss einer warmen/heißen Flüssigkeit (bspw. Wasser oder Milch) in das Getränkesubstrat die Aroma- und Wirkstoffe in die Flüssigkeit übergehen können.

Insbesondere bei der Zubereitung von Tee ist die richtige Ziehzeit absolut wesentlich, da der Tee ansonsten seine anregende Wirkung verliert und sein Aroma und an Geschmack verliert. Deshalb muss grundsätzlich nach einer individuellen Zeitvorgabe der Filter oder das Sieb mit dem Getränkesubstrat aus der warmen Flüssigkeit genommen werden, damit das Getränkesubstrat nicht weitere Aroma- und Wirkstoffe an die Flüssigkeit abgibt. Dies ist aber zumeist umständlich und der Anwender darauf angewiesen, ein zusätzliches Behältnis oder einen Teller zu verwenden, auf dem der Filter oder das Sieb nach seinem Gebrauch abgestellt wird.

Die US 2012/024162 A1, die US 2021/0241 61 A sowie die US 2013/160655 A1 betreffen jeweils ein Filtersystem zur Zubereitung von Getränken mittels eines Getränkesubstrats, das eine Einrichtung zur Bildung eines zweiten Flüssigkeits-Aufnahmeraums in einem Behältnis umfasst, wobei allerdings nicht die Einrichtung, sondern ein in ein Filter-/Siebbehältnis (hier die Getränkezutatenkammer) eingebrachtes Rückschlagventil mindestens eine Durchflussöffnung für die mit Inhaltstoffen angereicherte Flüssigkeit umfasst, wobei die Durchflussöffnung in der Weise ventilartig ausgebildet ist, dass ausschließlich durch ein auf den Kopf stellen des gesamten Behältnisses oder - wie in der US 2021/024161 A - durch das Vorsehen einer oberhalb des zweiten Flüssigkeits-Aufnahmeraums vorgesehenen Getränkezutatenkammer die Flüssigkeit durch die Durchflussöffnung nach unten in die Einrichtung läuft. Zunächst wird dabei durch eine Einflussöffnung bzw. den Kanal Flüssigkeit ausschließlich in das Filter-/Siebbehältnis mit dem Getränkesubstrat gebracht. Die Flüssigkeit kann dabei allerdings nicht nach oben in die Einrichtung, also in den ersten Flüssigkeits-Aufnahmeraum fließen, da die Einrichtung bzw. die Getränkekammer durch das Rückschlagventil verschlossen ist. Erst durch Drehen des gesamten Behältnisses oder das Vorsehen der oberen Getränkezutatenkammer gelangt die mit dem Substrat angereicherte Flüssigkeit in die Getränkekammer.

In der DE 297 08 492 U1 ist weiterhin ein gattungsgemäßes Filtersystem beschrieben, bei dem ein Verschlussmittel vorgesehen ist, was zum nachträglichen und zweckgemäßen Verschließen der Durchflussöffnung geeignet ist, welches aber nicht durch Einbringen der Einrichtung, sondern vielmehr durch die Betätigung eines Betätigungselements nach unten gedrückt werden muss.

### Darstellung der Erfindung

Der vorliegenden Erfindung liegt die Aufgabe zu Grunde, ein Filtersystem zu schaffen, welches die vorgenannten Probleme ausräumt und das eine einfache und anwenderfreundliche, individuelle Regulierung der Ziehzeit des Getränkesubstrats innerhalb einer Flüssigkeit erlaubt.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Filtersystems sind in den abhängigen Unteransprüchen angegeben.

Mittels des erfindungsgemäßen Filtersystems ist es nunmehr möglich, den Ziehvorgang durch Einsetzen der einführbaren Einrichtung in das Behältnis auf einfache und anwenderfreundliche Weise zu individuell zu regulieren. Die Flüssigkeit fließt beim Einsetzvorgang vom ersten Flüssigkeits-Aufnahmeraum in den zweiten Flüssigkeits-Aufnahmeraum, in dem sich kein Getränkesubstrat mehr befindet. Nach vorzugsweise vollständiger Aufnahme der Flüssigkeit im zweiten Flüssigkeits-Aufnahmeraum wird der zweite Flüssigkeits-Aufnahmeraum bzw. die Einrichtung an der mindestens einen Durchflussöffnung verschlossen.

Erfindungsgemäß ist die Einrichtung ein in das Behältnis oder das Filter-/Siebbehältnis einführbares, platten- oder tellerförmiges Absperrorgan mit mindestens einer Durchflussöffnung, wobei das Absperrorgan an der Innenwandung des Behältnisses formschlüssig und dicht abschließt.

An dem Behältnis oder an dem Filter-/Siebbehältnis ist ein durch Einbringen der Einrichtung in das Behältnis die mindestens eine Durchflussöffnung form- und/oder kraftschlüssig verschließendes Verschlussmittel vorgesehen.

### Kurzbeschreibung der Zeichnungen

Weitere Ziele, Merkmale, Vorteile und Anwendungsmöglichkeiten des erfindungsgemäßen Filtersystems ergeben sich aus der nachfolgenden Beschreibung eines Ausführungsbeispiels anhand der Zeichnungen.

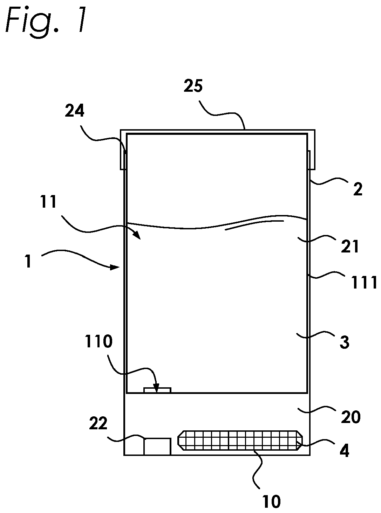

In den Zeichnungen zeigen
Fig. 1 ein nicht erfindungsgemäßes Filtersystem in der Seitenansicht;
Fig. 2 das erfindungsgemäße Filtersystem in der Seitenansicht;
Fig. 2a die Einrichtung wie in Fig. 2 in Einzelansicht.

### Ausführung der Erfindung

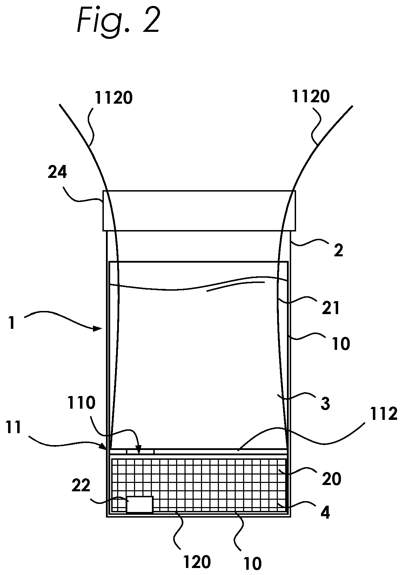

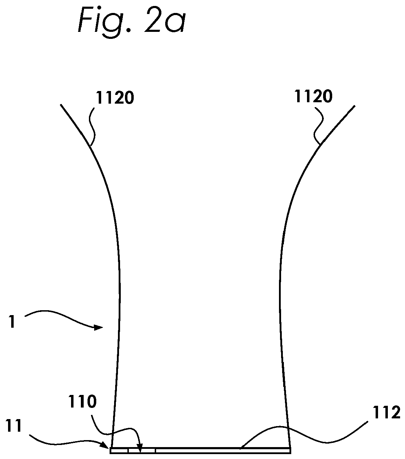

Wie aus Fig. 2 ersichtlich, umfasst das erfindungsgemäße Filtersystem 1 eine Einrichtung 11 zur Bildung eines zweiten Flüssigkeits-Aufnahmeraums 21, die 11 mindestens eine Durchflussöffnung 110 für die mit Inhaltstoffen angereicherte Flüssigkeit 3 umfasst, wobei die Durchflussöffnung 110 verschließbar ist und der Filter 10 ein in das Behältnis 2 einführbares Filter-/Siebbehältnis zur Aufnahme des Getränkesubstrats 4 ist.

In der in Fig. 2 dargestellten erfindungsgemäßen Ausführungsform der Erfindung ist die Einrichtung 11 ein in das Filter-/Siebbehältnis 12 einführbares, platten- oder tellerförmiges Absperrorgan 112 mit mindestens einer Durchflussöffnung 110, wobei das Absperrorgan 112 an der Innenwandung des Behältnisses 2 formschlüssig und dicht abschließt.

In der dargestellten Ausführungsform der Erfindung gemäß Fig. 2 ist an dem Behältnis 2 oder an dem Filter-/Siebbehältnis 12 ein durch Einbringen der Einrichtung 11 in das Behältnis 2 oder das Filter-/Siebbehältnis 12 die mindestens eine Durchflussöffnung 110 form- und/oder kraftschlüssig verschließendes Verschlussmittel 22 vorgesehen, so dass sich das Getränkesubstrat in dem durch die Einrichtung (11) gebildeten zweiten Flüssigkeits-Raum nicht weiter entfalten kann. Dabei ist das Verschlussmittel 22 hier als ein vom Behältnisboden 23 oder vom Filter-/Siebbehältnisboden 120 nach oben in die Durchflussöffnung 110 ragender Stopfen ausgebildet.

Weiterhin umfasst das Absperrorgan 112 mindestens ein nach Einführung in das Behältnis 2 über den Behältnisrand 24 nach oben hinausragendes Halteorgan 1120, welches ganz besonders bevorzugt flexibel ausgebildet ist.

Das erfindungsgemäße Filtersystem 1 beschränkt sich in seiner Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Filtersystem
- 2: Behältnis
- 3: Flüssigkeit
- 4: Getränkesubstrat
- 10: Filter oder Sieb
- 11: Einrichtung
- 12: Filter-/Siebbehältnis
- 20: erster Flüssigkeits-Aufnahmeraum
- 21: zweiter Flüssigkeits-Aufnahmeraum
- 22: Verschlussmittel / Stopfen
- 23: Behältnisboden
- 24: Behältnisrand
- 25: Deckel
- 110: Durchflussöffnung
- 111: behälterförmige Aufnahme
- 112: platten- oder tellerförmiges Absperrorgan
- 120: Filter-/Siebbehältnisboden
- 1120: Halteorgan

## Patentansprüche

1. Filtersystem (1) zur Zubereitung von Getränken mittels eines Getränkesubstrats (4) wie beispielsweise Kaffeepulver, Suppenpulver oder Tee, mit einem Behältnis (2) und einem für den Einsatz in dem Behältnis (2) vorgesehenen Filter (10) oder Sieb, mittels dem das Getränkesubstrat (4) in die erhitzte Flüssigkeit (3) eines in dem Behältnis (2) vorgesehenen ersten Flüssigkeits-Aufnahmeraums (20) geleitet wird, in dem sich das gefilterte Getränkesubstrat (4) entfaltet und seine Inhaltsstoffe an die Flüssigkeit (3) abgibt, wobei das Filtersystem (1) eine Einrichtung (11) zur Bildung eines zweiten Flüssigkeits-Aufnahmeraums (21) umfasst, die (11) mindestens eine Durchflussöffnung (110) für die mit Inhaltstoffen angereicherte Flüssigkeit (3) umfasst, wobei die Durchflussöffnung (110) verschließbar ist und der Filter (10) ein in das Behältnis (2) einführbares Filter-/Siebbehältniszur Aufnahme des Getränkesubstrats (4) ist,
**dadurch gekennzeichnet, dass**
die Einrichtung (11) als platten- oder tellerförmiges Absperrorgan (112) mit mindestens einem nach Einführung in das Behätlnis (2) über den Behältnisrand (24) des Behältnisses (2) nach oben ragenden Halteorgan (1120) ausgebildet ist, wobei das Absperrorgan (112) in das Behältnis (2) einführbar ist und an der Innenwandung des Filter-/Siebbehältnisses formschlüssig und dicht abschließt und an dem Filter-/Siebbehältnis ein durch Einbringen des Absperrorgans (112) in das Behältnis (2) die mindestens eine Durchflussöffnung (110) form- und/oder kraftschlüssig verschließendes Verschlussmittel (22) vorgesehen ist, so dass sich das Getränkesubstrat in dem durch die Einrichtung (11) gebildeten zweiten FlüssigkeitsRaum nicht weiter entfalten kann.

2. Filtersystem (1) nach Anspruch 1,
**dadurch gekennzeichnet, dass**
das Verschlussmittel (22) als ein vom Behältnisboden (23, 120) oder vom Filter-/Siebbehältnisboden (120) nach oben in die Durchflussöffnung (110) ragender Stopfen ausgebildet ist.

3. Filtersystem (1) nach Anspruch 1 oder 2,
**dadurch gekennzeichnet, dass**
das mindestens eine Halteorgan (1120) flexibel ausgebildet ist.

## Claims

1. A filter system (1) for preparing beverages by means of a beverage substrate (4) such as coffee powder, soup powder or tea, comprising a container (2) and a filter (10) or sieve provided for use in the container (2), by means of which the beverage substrate (4) is passed into the heated liquid (3) of a first liquid receiving space (20) provided in the container (2), in which the filtered beverage substrate (4) unfolds and releases its ingredients into the liquid (3), the filter system (1) comprising means (11) for forming a second liquid-receiving space (21), the filter (11) comprises at least one flow-through opening (110) for the liquid (3) enriched with ingredients, wherein the flow-through opening (110) is closable and the filter (10) is a filter/screen container insertable into the container (2) for receiving the beverage substrate (4), **characterised in that**
the device (11) is designed as a plate-shaped or disc-shaped shutoff element (112) with at least one retaining element (1120) projecting upwards beyond the container edge (24) of the container (2) after insertion into the container (2), wherein the shutoff member (112) can be introduced into the container (2) and closes off positively and tightly against the inner wall of the filter/screen container, and a closure means (22) is provided on the filter/screen container which closes off the at least one flow-through opening (110) positively and/or non-positively by introducing the shutoff member (112) into the container (2), so that the beverage substrate cannot unfold further in the second liquid space formed by the device (11).

2. Filter system (1) according to claim 1,
**characterised in that**
the closure means (22) is formed as a plug projecting upwards from the container bottom (23, 120) or from the filter/sieve container bottom (120) into the flow-through opening (110).

3. Filter system (1) according to claim 1 or 2,
**characterised in that**
at least one retaining member (1120) is flexible.

## Revendications

1. Système de filtration (1) pour la préparation de boissons au moyen d'un substrat de boisson (4), tel que du café en poudre, de la soupe en poudre ou du thé, comprenant un récipient (2) et un filtre (10) ou un tamis prévu pour être utilisé dans le récipient (2), au moyen duquel le substrat de boisson (4) est dirigé dans le liquide chauffé (3) d'un premier espace de réception de liquide (20) prévu dans le récipient (2), dans lequel le substrat de boisson filtré (4) se déploie et libère ses composants dans le liquide (3), le système de filtration (1) comprenant un dispositif (11) pour former un deuxième espace de réception de liquide (21), le (11) comprend au moins une ouverture de passage (110) pour le liquide (3) enrichi en substances contenues, l'ouverture de passage (110) pouvant être fermé et le filtre (10) étant un récipient à filtre/tamis pouvant être introduit dans le récipient (2) pour recevoir le substrat de boisson (4),
**caractérisé en ce que**
le dispositif (11) est conçu comme un organe d'arrêt (112) en forme de plaque ou de plateau avec au moins un organe de retenue (1120) dépassant vers le haut du bord (24) du récipient (2) après introduction dans le récipient (2), l'organe d'arrêt (112) pouvant être introduit dans le récipient (2) et se fermant de manière étanche et par complémentarité de forme sur la paroi intérieure du récipient à filtre/tamis et un moyen de fermeture (22) fermant par complémentarité de forme et/ou de force l'au moins une ouverture d'écoulement (110) par l'introduction de l'organe d'arrêt (112) dans le récipient (2) étant prévu sur le récipient à filtre/tamis, de sorte que le substrat de la boisson ne peut pas se déployer davantage dans le deuxième espace de liquide formé par le dispositif (11).

2. Système de filtration (1) selon la revendication 1,
**caractérisé en ce que**
le moyen de fermeture (22) est réalisé sous la forme d'un bouchon faisant saillie vers le haut dans l'ouverture d'écoulement (110) à partir du fond du récipient (23, 120) ou du fond du récipient de filtre/filtre (120).

3. Système de filtration (1) selon la revendication 1 ou 2,
**caractérisé en ce qu'**
au moins un organe de retenue (1120) est conçu de manière flexible.
